(19) Europäisches Patentamt / European Patent Office / Office européen des brevets

(11) **EP 2 672 219 A1**

(12) **EUROPEAN PATENT APPLICATION**
published in accordance with Art. 153(4) EPC

(43) Date of publication:
**11.12.2013 Bulletin 2013/50**

(21) Application number: **11857437.5**

(22) Date of filing: **03.02.2011**

(51) Int Cl.:
**G01B 15/00** (2006.01)   **G01S 13/88** (2006.01)

(86) International application number:
**PCT/JP2011/000618**

(87) International publication number:
**WO 2012/104921 (09.08.2012 Gazette 2012/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Nireco Corporation**
**Tokyo 192-8522 (JP)**

(72) Inventors:
• **YAMAMOTO, Masahiro**
**Tokyo 192-8522 (JP)**
• **YAMAKURA, Takahiro**
**Tokyo 192-8522 (JP)**
• **KATO, Yasumasa**
**Tokyo 192-8522 (JP)**
• **NAKAO, Tomoki**
**Tokyo 192-8522 (JP)**

(74) Representative: **Viering, Jentschura & Partner**
**Grillparzerstrasse 14**
**81675 München (DE)**

(54) **WIDTH-DIRECTION END POSITION MEASURING DEVICE FOR BAND-SHAPED MEMBER, WIDTH-DIRECTION CENTER POSITION MEASURING DEVICE FOR BAND-SHAPED MEMBER, AND MICROWAVE SCATTERING PLATE**

(57)    The apparatus according to the present invention is an apparatus for measuring width direction end position of a strip which passes through an enclosed space surrounded by a plurality of surfaces. The apparatus includes an antenna section which emits electromagnetic waves toward the width direction end and receives the electromagnetic waves reflected by the width direction end; a signal processing section for determining a position of the width direction end using the reflected electromagnetic waves; and a scattering plate for scattering electromagnetic waves which are incident thereon, wherein the antenna section is installed on a first surface which faces the width direction end a position of which is to be determined and the scattering plate is installed on a second surface which faces the first surface.

FIG. 18

EP 2 672 219 A1

## Description

## Technical Field

The present invention relates to an apparatus for measuring width direction end position of a strip, an apparatus for measuring width direction central position of a strip and a microwave scattering plate.

## Background Art

In production and treatment processes of strips such as steel strips, strips must be made by control to travel without meandering. Further, in coiling a strip, the end of the strip to be coiled must be kept at a fixed position with respect to the coiling position by control for a better shape of the coiled strip. For such a control, an apparatus for measuring width direction end position of a strip and an apparatus for measuring width direction central position of a strip are used in the production and treatment processes of strips.

As an apparatus for measuring width direction end position of a strip and an apparatus for measuring width direction central position of a strip, an optical type, a pneumatic type, a capacitance type and the like are used. However, the optical type has a problem that it is sensitive to the environment such as steam and dust particles. The pneumatic type has a problem that it cannot achieve a high accuracy of detection. The capacitance type has a problem that it is not sufficiently stable.

In order to solve the problems described above, the applicant has developed and commercialized an apparatus for measuring width direction end position of a strip and an apparatus for measuring width direction central position of a strip in which electromagnetic waves are used (hereinafter called an electromagnetic wave type) (Paten Document 1). In the electromagnetic wave type, electromagnetic waves are transmitted toward the end of a strip and reflected electromagnetic waves are detected to measure a distance toward the end. The electromagnetic wave type has advantages that it is not sensitive to the environment such as steam and dust particles, achieves a high accuracy of detection and is highly stable. Thanks to the above-described advantages, the electromagnetic wave type can be used with stability even in a hostile environment such as in heat treat furnaces.

However, when the electromagnetic wave type is used in an enclosed space of predetermined dimensions or smaller such as in a narrow furnace, there arises a problem that noise is generated by electromagnetic waves reflected on inside surfaces of the enclosed space and the noise deteriorates accuracy of measurement of the electromagnetic wave type. Thus, a sufficiently high accuracy of measurement can hardly be assured when the electromagnetic wave type is used in an enclosed space of predetermined dimensions or smaller.

Further, materials to absorb electromagnetic waves are used to prevent harmful effects of noise caused by electromagnetic waves such as microwaves (for example, Patent Document 2). However, such materials to absorb electromagnetic waves are poor in environmental resistance such as heat-resistance, and therefore cannot be used at elevated temperatures such as in a high-temperature furnace.

## Prior art documents

## Patent documents

Patent Document 1: JP4416798B
Patent Document 2: JP2008-277363A

## Summary of Invention

## Problem to be solved by the invention

Accordingly, there is a need for an apparatus for measuring width direction end position of a strip and an apparatus for measuring width direction central position of a strip which use electromagnetic waves and can assure a sufficiently high accuracy of measurement in an enclosed space of predetermined or smaller dimensions such as in a narrow furnace. Further, there is a need for a member to absorb electromagnetic waves which replaces materials to absorb electromagnetic waves and which is good in environmental resistance.

## Means for solving the problem

An apparatus for measuring width direction end position of a strip according to the first aspect of the present invention is an apparatus for measuring width direction end position of a strip which passes through an enclosed space surrounded by a plurality of surfaces. The apparatus for measuring width direction end position of a strip according to the present aspect includes an antenna section which emits electromagnetic waves toward the width direction end and receives the electromagnetic waves reflected by the width direction end; a signal processing section for determining a position of the width direction end using the reflected electromagnetic waves; and a scattering plate for scattering electromagnetic waves which are incident thereon, wherein the antenna section is installed on a first surface which faces the width direction end a position of which is to be determined and the scattering plate is installed on a second surface which faces the first surface.

Since the apparatus for measuring width direction end position of a strip according to the present aspect is provided with the scattering plate on the surface of the enclosed space, which faces the surface on which the antenna section in installed, electromagnetic waves which have been emitted by the antenna section, reflected by the opposite surface and return again to the antenna section can be remarkably reduced. Accordingly, in the apparatus for measuring width direction end position of a strip according to the present aspect, noise caused by reflected electromagnetic waves in an enclosed space smaller than predetermined dimensions can be remarkably reduced over a wide range of distance between the surface on which the antennas section is installed and the end of an object to be measured, and therefore a sufficient accuracy of measurement can be ensured in the enclosed space of predetermined or smaller dimensions.

In an embodiment of the present aspect, the scattering plate is corrugated.

In the present embodiment, electromagnetic waves which have reached the scattering plate are reflected in directions which are different from the direction in which electromagnetic waves incident onto a flat plate installed in place of the scattering plate at the same position would be specularly reflected by the flat plate, and therefore electromagnetic waves which travel in the direction in which electromagnetic waves incident onto the flat plate installed in place of the scattering plate at the same position would be specularly reflected can be remarkably reduced. Accordingly, noise of the measuring apparatus caused by reflected electromagnetic waves can be remarkably reduced. Further, the scattering plat which is corrugated can be easily made from metal such as steel by working.

In another embodiment of the present aspect, the scattering plate is provided with a set of cone- or pyramid-shaped projections or cone- or pyramid-shaped depressions arranged thereon.

In the present embodiment, electromagnetic waves which have reached the scattering plate are uniformly scattered around cone- or pyramid-shaped projections or cone- or pyramid-shaped depressions, and therefore electromagnetic waves which travel in the direction in which electromagnetic waves incident onto a flat plate installed in place of the scattering plate at the same position would be specularly reflected can be remarkably reduced. Accordingly, noise of the measuring apparatus caused by reflected electromagnetic waves can be remarkably reduced.

An apparatus for measuring width direction central position of a strip according to the second aspect of the present invention is an apparatus for measuring width direction central position of a strip which passes through an enclosed space surrounded by a plurality of surfaces. The apparatus includes a first antenna section which emits electromagnetic waves toward one of the width direction ends and receives the electromagnetic waves reflected by the one of the width direction ends; a second antenna section which emits electromagnetic waves toward the other of the width direction ends and receives the electromagnetic waves reflected by the other of the width direction ends; a signal processing section for determining a width direction central position of the strip by determining positions of both width direction ends using data obtained from the reflected electromagnetic waves; and scattering plates for scattering electromagnetic waves which are incident thereon, wherein the first antenna section is installed on a first surface of the enclosed space, which faces the one of the width direction end, the second antenna section is installed on a second surface of the enclosed space, which faces the other of the width direction ends and the scattering plates are installed respectively around the first antenna section on the first surface and around the second antenna section on the second surface.

The apparatus for measuring width direction central position of a strip according to the present aspect is provided with the scattering plates which are installed respectively around the second antenna section on the second surface facing the first surface on which the first antenna section is installed and around the first antenna section on the first surface facing the second surface on which the second antenna section is installed, and therefore electromagnetic waves which have been emitted by the first and second antenna sections and reflected by the opposite surfaces and return again to the first and second antenna sections can be remarkably reduced. Accordingly, in the apparatus for measuring width direction central position of a strip according to the present aspect, noise caused by reflected electromagnetic waves in an enclosed space smaller than predetermined dimensions can be remarkably reduced over a wide range of distance between one of the surfaces on which the first and second antennas sections are installed and the corresponding end of an object to be measured, and therefore a sufficient accuracy of measurement can be ensured in the enclosed space of predetermined or smaller dimensions.

A scattering plate according to the third aspect of the present invention is a scattering plate for scattering microwaves which are incident thereon, wherein the scattering plate is corrugated.

In the scattering plate according to the present aspect, electromagnetic waves which travel in the direction in which electromagnetic waves incident onto a flat plate installed in place of the scattering plate at the same position would be specularly reflected can be remarkably reduced. Further, the scattering plate according to the present aspect can be made from metal, and therefore is good in environmental resistance such as heat-resistance

In an embodiment of the present aspect, a length of a face of the corrugation is more than a half of the wavelength of the microwaves.

In the present embodiment, microwaves are efficiently scattered. If the length of the face of the corrugation is less than a half of the wavelength of the frequency of the microwaves, scattering effect thorough reflection on the face might not be obtained.

In another embodiment of the present aspect, an angle of incidence of the microwaves with respect to a face of the corrugation ranges from 20 degrees to 45 degrees.

In the present embodiment, microwaves which are incident onto the face of the corrugation are scattered in directions completely different from the incidence direction, and therefore the microwaves are efficiently scattered.

A scattering plate according to the fourth aspect of the present invention is a scattering plate for scattering microwaves which are incident thereon, wherein the scattering plate is provided with a set of cone- or pyramid-shaped projections or cone- or pyramid-shaped depressions thereon.

In the scattering plate according to the present aspect, electromagnetic waves which travel in the direction in which electromagnetic waves incident onto a flat plate installed in place of the scattering plate at the same position would be specularly reflected can be remarkably reduced. Further, the scattering plate according to the present aspect can be made from metal, and therefore is good in environmental resistance such as heat-resistance

In an embodiment of the present aspect, a length of a surface of a cone or a pyramid is more than a half of the wavelength of the microwaves.

In the present embodiment, microwaves are efficiently scattered. If the length of a surface of a cone or a pyramid is less than a half of the wavelength of the microwaves, scattering effect thorough reflection on the face might not be obtained.

**Brief Description of the Drawings**

Fig. 1 illustrates an apparatus for measuring width direction central position of a strip;
Fig. 2 shows a configuration of the signal processing unit for the left end in the signal processing section of the apparatus for measuring width direction central position of a strip according to the present embodiment;
Fig. 3 shows an apparatus for measuring width direction edge position of a strip according to an embodiment of the present invention, installed in an enclosed space;
Fig. 4 shows a strip passing through a furnace as an enclosed space;
Fig. 5 shows a strip in a furnace and an apparatus for measuring width direction edge position of a strip according to an embodiment of the present invention, installed in the furnace;
Fig. 6 illustrates a detection area of an apparatus for measuring width direction edge position of a strip according to an embodiment of the present invention, installed in a furnace;
Fig. 7 illustrates an experiment to determine how electromagnetic waves which are emitted by an apparatus for measuring width direction edge position of a strip according to an embodiment of the present invention and reflected by a plate affect the apparatus;
Fig. 8A shows intensity of electromagnetic waves which are emitted by the apparatus for measuring width direction edge position of a strip according to the embodiment of the present invention, reflected by a plate at an angle of inclination of 5 degrees and received by the apparatus in the experiment described in connection with Fig. 7;
Fig. 8B shows intensity of electromagnetic waves which are emitted by the apparatus for measuring width direction edge position of a strip according to the embodiment of the present invention, reflected by a plate at an angle of inclination of 10 degrees and received by the apparatus in the experiment described in connection with Fig. 7;
Fig. 8C shows intensity of electromagnetic waves which are emitted by the apparatus for measuring width direction edge position of a strip according to the embodiment of the present invention, reflected by a plate at an angle of inclination of 15 degrees and received by the apparatus in the experiment described in connection with Fig. 7;
Fig. 8D shows intensity of electromagnetic waves which are emitted by the apparatus for measuring width direction edge position of a strip according to the embodiment of the present invention, reflected by a plate at an angle of inclination of 20 degrees and received by the apparatus in the experiment described in connection with Fig. 7;
Fig. 8E shows intensity of electromagnetic waves which are emitted by the apparatus for measuring width direction edge position of a strip according to the embodiment of the present invention, reflected by a plate at an angle of inclination of 25 degrees and received by the apparatus in the experiment described in connection with Fig. 7;
Fig. 8F shows intensity of electromagnetic waves which are emitted by the apparatus for measuring width direction edge position of a strip according to the embodiment of the present invention, reflected by a plate at an angle of inclination of 30 degrees and received by the apparatus in the experiment described in connection with Fig. 7;
Fig. 8G shows intensity of electromagnetic waves which are emitted by the apparatus for measuring width direction edge position of a strip according to the embodiment of the present invention, reflected by a plate at an angle of inclination of 35 degrees and received by the apparatus in the experiment described in connection with Fig. 7;
Fig. 8H shows intensity of electromagnetic waves which are emitted by the apparatus for measuring width direction edge position of a strip according to the embodiment of the present invention, reflected by a plate at an angle of inclination of 40 degrees and received by the apparatus in the experiment described in connection with Fig. 7;

Fig. 8I shows intensity of electromagnetic waves which are emitted by the apparatus for measuring width direction edge position of a strip according to the embodiment of the present invention, reflected by a plate at an angle of inclination of 45 degrees and received by the apparatus in the experiment described in connection with Fig. 7;

Fig. 9 illustrates an experiment to determine how electromagnetic waves which are emitted by the apparatus for measuring width direction edge position of a strip according to the embodiment of the present invention and reflected by a scattering plate which is corrugated affect the apparatus;

Fig. 10 illustrates an experiment to determine how electromagnetic waves which are emitted by the apparatus for measuring width direction edge position of a strip according to the embodiment of the present invention and reflected by a scattering plate provided with a set of cone- or pyramid-shaped projections affect the apparatus;

Fig. 11A shows plan views of scattering plates in which cone- or pyramid-shaped projections are arranged on a plane;

Fig. 11B shows perspective drawings of scattering plates provided respectively with cone- or pyramid-shaped projections and with cone- or pyramid-shaped depressions thereon;

Fig. 12 shows intensity of electromagnetic waves which are emitted by the apparatus for measuring width direction edge position of a strip according to the embodiment of the present invention, reflected by the scattering plate which is corrugated and received by the apparatus in the experiment described in connection with Fig. 9;

Fig. 13 shows intensity of electromagnetic waves which are emitted by the apparatus for measuring width direction edge position of a strip according to the embodiment of the present invention, reflected by the scattering plate provided with a set of cone- or pyramid-shaped projections and received by the apparatus in the experiment described in connection with Fig. 1;

Fig. 14 illustrates an experiment to determine how electromagnetic waves which are reflected by a furnace wall affect the apparatus for measuring width direction edge position of a strip according to the embodiment of the present invention when a position of the strip is changed in the furnace;

Fig. 15 shows measurements of the end position obtained by the apparatus for measuring width direction edge position of a strip according to the embodiment of the present invention when a scattering plate is not used in the experiment shown in Fig. 14;

Fig. 16 shows measurements of the end position obtained by the apparatus for measuring width direction edge position of a strip according to the embodiment of the present invention when the scattering plate which is corrugated is used in the experiment shown in Fig. 14;

Fig. 17 shows measurements of the end position obtained by the apparatus for measuring width direction edge position of a strip according to the embodiment of the present invention when the scattering plate provided with a set of cone- or pyramid-shaped projections is used in the experiment shown in Fig. 14; and

Fig. 18 shows an apparatus for measuring width direction central position of a strip according to an embodiment of the present invention, installed in an enclosed space.

**Description of Embodiments**

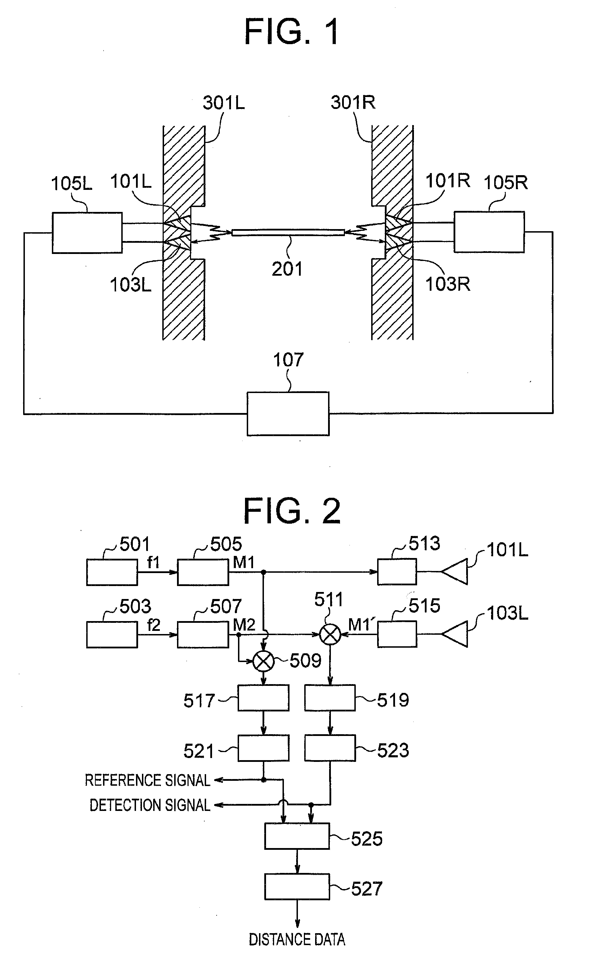

Fig. 1 illustrates an apparatus for measuring width direction central position of a strip. A scattering plate is not shown in Fig. 1, and therefore the apparatus of the electromagnetic wave type shown in Fig. 1 is identical with that described in Patent Document 1. The scattering plate will be described in detail later.

A cold-rolled steel strip 201 runs between a furnace wall 301R and a furnace wall 301L of a continuous annealing furnace as an enclosed space. The enclosed space is a space which extends a certain distance in the longitudinal direction of the strip 201 and is formed by surfaces which surround the strip 201. The enclosed space has openings as an entrance and an exit of the strip. In the drawing, the horizontal direction indicates to the width direction of the cold-rolled steel strip 201, and the cold-rolled steel strip 201 runs from the near side to the far side.

On the furnace wall 301R on the right side, a microwave transmitting antenna 101R and a microwave receiving antenna 103R are provided such that microwaves transmitted by the microwave transmitting antenna 101R is reflected by the right end of the cold-rolled steel strip 201 and received by the microwave receiving antenna 103R. Similarly, on the furnace wall 301L on the left side, a microwave transmitting antenna 101 L and a microwave receiving antenna 103 L are provided such that microwaves transmitted by the microwave transmitting antenna 101 L is reflected by the left end of the cold-rolled steel strip 201 and received by the microwave receiving antenna 103 L.

When time between transmission of microwaves and reception of the reflected waves is represented as t and velocity of the microwaves is represented as c, a distance to an object which has reflected the microwaves can be obtained as below.

$$t \cdot c/2$$

The microwave transmitting antenna 101R and the microwave receiving antenna 103R are connected to a signal processing unit for the right end 105R. The signal processing unit for the right end 105R generates microwaves and delivers them to the microwave transmitting antenna 101R, converts microwaves received by the microwave receiving antenna 103R into an electric signal, measures time t between transmission of microwaves and reception of the reflected waves by processing the electric signal and calculates a distance to the right end of the cold-rolled steel strip 201 based on the time t to determine a position of the right end of the cold-rolled steel strip 201. Similarly, the microwave transmitting antenna 101L and the microwave receiving antenna 103 L are connected to a signal processing unit for the left end 105 L. The signal processing unit for the left end 105L generates microwaves and delivers them to the microwave transmitting antenna 101L, converts microwaves received by the microwave receiving antenna 103L into an electric signal, measures time t between transmission of microwaves and reception of the reflected waves by processing the electric signal and calculates a distance to the left end of the cold-rolled steel strip 201 based on the time t to determine a position of the left end of the cold-rolled steel strip 201. Signal from the signal processing unit for the right end 105R and signal from the signal processing unit for the left end 105 L are delivered to a signal processing unit for the central position of the strip 107. The signal processing unit for the central position of the strip 107 detects a width direction central position of the cold-rolled steel strip 201 as the midpoint between the position of the right end and the position of the left end. A combination of the signal processing unit for the right end 105R, the signal processing unit for the left end 105L and the signal processing unit for the central position of the strip 107 is referred to as a signal processing section.

In the above-described apparatus for measuring width direction central position of a strip, a group of the microwave transmitting antenna and the microwave receiving antenna on the right side and the signal processing unit for the right end or a group of the microwave transmitting antenna and the microwave receiving antenna on the left side and the signal processing unit for the left end forms an apparatus for measuring width direction end position of a strip. Each group can be made to function independently for measuring the right or left end position of the strip.

Fig. 2 shows a configuration of the signal processing unit for the left end in the signal processing section of the apparatus for measuring width direction central position of a strip according to the present embodiment. Fig. 2 and the description thereof are identical with those described in Patent Document 1.

A clock generator 501 generates a clock signal with a frequency f1. This clock signal enters an M-sequence signal generator 505 and is converted into an M-sequence pseudo-random signal. The term "pseudo-random signal" as used in the text of specification and in the claims refers to a signal that has a periodicity when viewed for a long time but can be considered a random signal when viewed for a short time. An M-sequence signal is universally known as a typical pseudo-random signal composed of two values, "1" and "0," and an example of how such a signal is formed is described in JP-H06-16080B. The wave number of the pulses included in one period of this M-sequence signal is designated as N. The output M1 of the M-sequence signal generator 505 is split in two parts, one of which enters a power amplifier 513, is power-amplified, and is emitted as microwaves from the transmitting antenna 101L.

A clock generator 503 generates a clock signal with a frequency f2. This frequency f2 is set slightly lower than the frequency f1. This clock signal enters an M-sequence signal generator 507 and is converted into an M-sequence pseudo-random signal. Since the M-sequence signal generator 505 and M-sequence signal generator 507 are made up of exactly the same circuitry, the repeat pattern of the output from the M-sequence signal generator 13 and that of the output from M-sequence signal generator 14 are identical with each other, and the only difference is the frequency.

The output M2 of the M-sequence signal generator 507 is split in two parts, one of which enters a multiplier 509 and is multiplied by the output M1 of the M-sequence signal generator 505. The output of the multiplier 509 enters a low-pass filter 517, where the high-frequency component is removed. The output of this low-pass filter 517 is a triangular wave. The timing with which the output of this low-pass filter 517 reaches its maximum value is detected by a maximum value detection circuit 521, pulses are generated with this timing, and these are used as reference signals. If the period of the reference signals is designated as $T_A$, the difference in wave number between the signal M1 and the signal M2 included in this period $T_A$ is the wave number N of exactly one period. Specifically, this relationship is expressed as follows:

$$T_A \cdot f1 = T_A \cdot f2 + N$$

From this, the following is obtained.

$$T_A = N/(f1\text{-}f2) \quad \cdots \quad (1)$$

The microwaves reflected by the end of the cold-rolled steel strip 201 are received by the microwave receiving antenna 103L and amplified by a power amplifier 515. The output signal M1' of the power amplifier 515 enters a multiplier 511 and is multiplied by the output signal M2 of the M-sequence signal generator 507. The output of the multiplier 511 enters a low-pass filter 519, where the high-frequency component is removed. The output of this low-pass filter 519 is a triangular wave. The timing with which the output of this low-pass filter 519 reaches its maximum value is detected by a maximum value detection circuit 523, pulses are generated at this timing, and these are used as detection signals.

If the time period from the time at which microwaves are emitted by the microwave transmitting antenna 101L to the time at which the reflected waves are detected by the receiving antenna 103L is designated as $\Delta t$, and the difference between the time at which a detection signal is generated and the time at which a reference signal is generated is designated as $\tau$, then the wave number of the signal M2 generated during the period $\tau$ is lower than the wave number of the signal M1 generated during the period $\tau$ by the wave number of the signal M1 generated during the period $\Delta t$. Accordingly, the following equation holds true.

$$\tau \cdot f2 = \tau \cdot f1 - \Delta t \cdot f1$$

From this, the following is obtained:

$$\Delta t = (f1 - f2) \cdot \tau / f1 \quad \cdots \quad (2)$$

A time difference detection circuit 25 performs this calculation and determines $\Delta t$.

If the velocity of the microwaves is designated as c, the distance x between the transmitting antenna 101L or the receiving antenna 103L and the edge of the cold-rolled steel strip 201 is calculated from the following equation

$$x = (f1 - f2) \cdot \tau \cdot c / (2 \cdot f1) \quad \cdots \quad (3)$$

Thus, the position of the edge of the cold-rolled steel strip 201 is determined. A distance computation circuit 527 performs this calculation to determine the distance x.

With this means, only signals having the same waveform as the M-sequence signals generated by the M-sequence signal generator 505 and M-sequence signal generator 507 are valid. Therefore, noise can be eliminated almost completely, and even in cases where the power of the reflected waves is very small, the reflected wave signal can be obtained at a high S/N ratio.

In cases where microwaves from the microwave transmitting antenna 101R in Fig. 1 are detected by the microwave receiving antenna 103L, or in cases where microwaves from the microwave transmitting antenna 101L are detected by the microwave receiving antenna 103R, detection error caused by mixture of the two signals can be prevented by having the waveform of the M sequence used in the right-side edge position measurement apparatus 105R be separate from the pattern of the M sequence used in the left-side edge position measurement apparatus 105L.

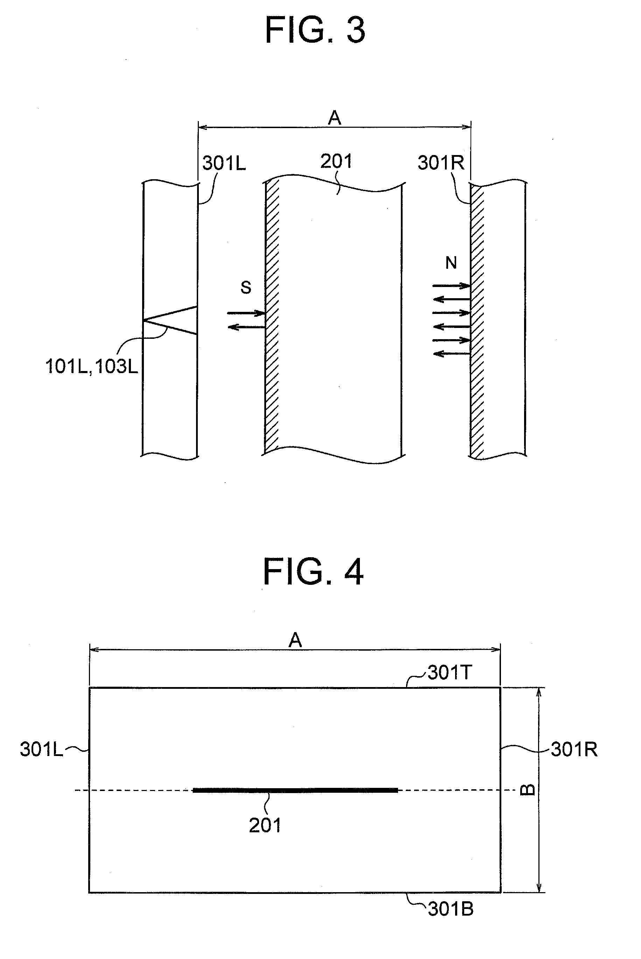

Fig. 3 shows an apparatus for measuring width direction edge position of a strip according to an embodiment of the present invention, installed in an enclosed space. In the description below, the enclosed space is a furnace. However, the enclosed space can be a passage like a throat or the like besides furnaces.

In Fig. 3, electromagnetic waves emitted by the transmitting antenna 101L provided on the furnace wall 301L are reflected by the edge of the strip 201 and then received by the receiving antenna 103L. The transmitting antenna 101L and the receiving antenna 103L are installed such that the electric field plane of the electromagnetic waves is parallel to the plane of the strip 201. Electromagnetic waves reflected by the edge of the strip 201 are used as signal for measurement of a distance to the edge of the strip 201, and therefore they are represented as S in Fig. 3. On the other hand, some of the electromagnetic waves emitted by the transmitting antenna 101L reach the furnace wall 301R facing the furnace wall 301L, are reflected by the furnace wall 301R and are received by the receiving antenna 103L. Electromagnetic waves reflected by the furnace wall 301R are noise in measurement of a distance to the edge of the strip 201 using electromagnetic waves reflected by the edge of the strip 201, and therefore the electromagnetic waves reflected by the furnace wall 301R are represented as N in Fig. 3. In order to obtain a higher SN ratio (a signal to noise ratio), influence of noise N generated by reflection on the furnace wall 301R must be reduced.

Free space propagation loss T of reflected power of electromagnetic waves is represented by the following expression.

$$T = 10 \log \left( \frac{4 \pi D}{\lambda} \right)^2$$

Unit of free space propagation loss T is dB. D represents propagated distance while $\lambda$ represents wavelength of the electromagnetic waves. Since free space propagation loss T increases in proportion to square of propagated distance, noise caused by reflected electromagnetic waves is negligible when the propagated distance is great.

Fig. 4 shows a strip passing through a furnace as an enclosed space.

Fig. 4 shows a cross section perpendicular to the plane of the strip. The furnace has furnace walls 301T and 301B which are parallel to the plane of the strip 201 and furnace walls 301L and 301R which are perpendicular to the plane of the strip 201. In the cross section shown in Fig. 4, length in the direction parallel to the plane of the strip of the furnace wall 301T and that of the furnace wall 301B are A, while length in the direction perpendicular to the plane of the strip of the furnace wall 301L and that of the furnace wall 301R is B. If A is smaller than 2000 mm or B is smaller than 1000 mm, an influence of electromagnetic waves reflected on the furnace wall surfaces (inner surfaces of the enclosed space) cannot be ignored. The reason that an influence of noise becomes greater when A is smaller than a predetermined value has been described in connection with Fig. 3. The reason that an influence of noise becomes greater when B is smaller than a predetermined value will be described later.

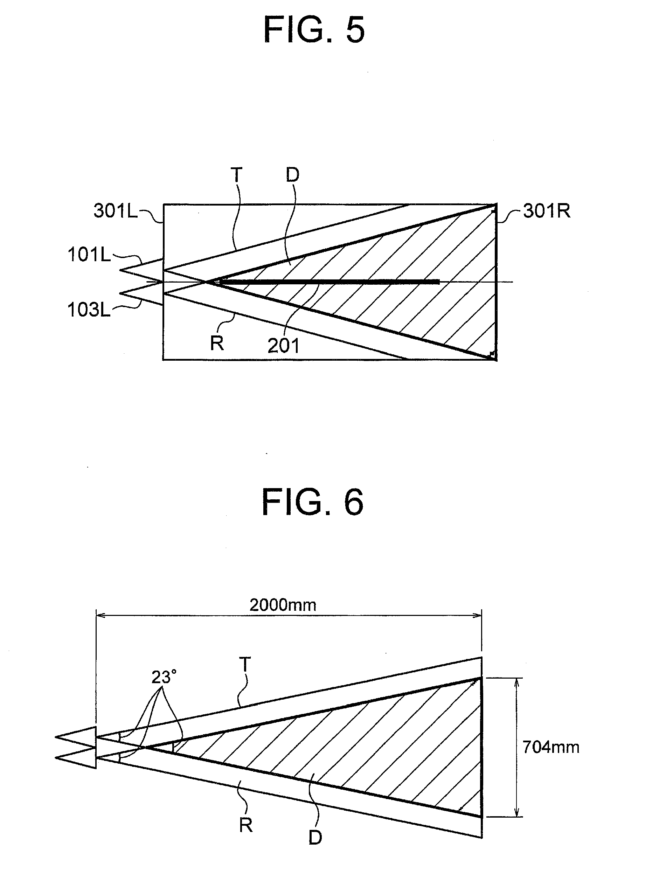

Fig. 5 shows a strip in a furnace and an apparatus for measuring width direction edge position of a strip according to an embodiment of the present invention, installed in the furnace.

Fig. 5 shows a cross section perpendicular to the plane of the strip. In Fig. 5, a transmission area into which electromagnetic waves are transmitted by a transmitting antenna 101L installed on a furnace wall surface 301L is represented as T. Further, a reception area from which electromagnetic waves are received by a receiving antenna 103L installed on the furnace wall surface 301L is represented as R. The area in which the transmission area T and the reception area R overlap each other is a detection area D of the apparatus for measuring width direction edge position of a strip.

Fig. 6 illustrates a detection area of the apparatus for measuring width direction edge position of a strip according to the embodiment of the present invention, installed in a furnace.

By way of example, when frequency of the carrier wave is 10 GHz and directional gain is 20 dBi, the transmission area and reception area corresponds to approximately 23 degrees (main lobe). As shown in Fog. 6, width in the vertical direction of the detection area is approximately 700 mm when the distance in the horizontal direction is 2000 mm.

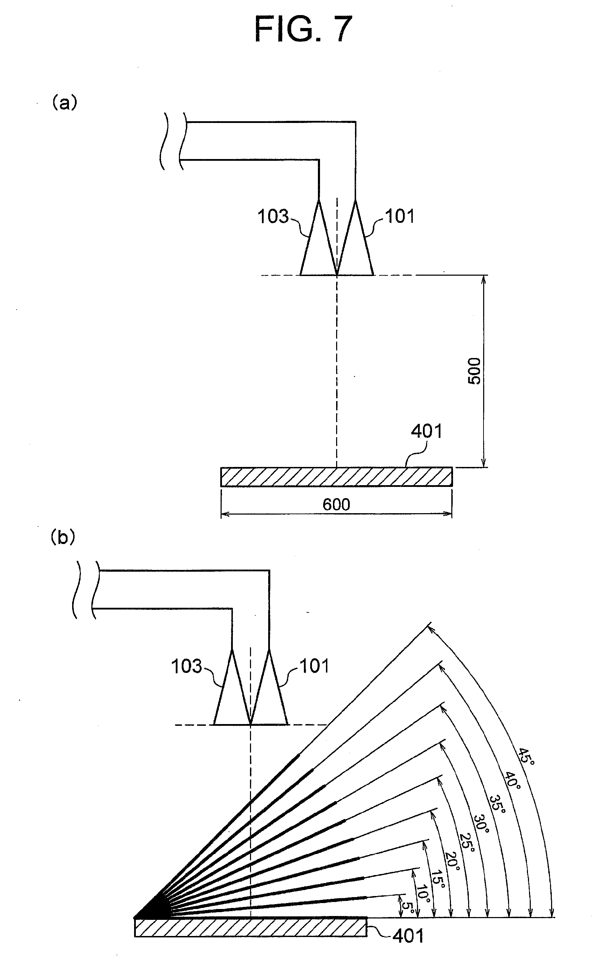

Fig. 7 illustrates an experiment to determine how electromagnetic waves which are emitted by an apparatus for measuring width direction edge position of a strip according to an embodiment of the present invention and reflected by a plate affect the apparatus. Electromagnetic waves reflected by the plate correspond to noise as described in connection with Fig. 4 and should preferably be minimized.

As shown in Fig. 7(a), the plate is 600 mm square and the plate is initially set at a distance of 500 mm from transmitting and receiving antennas such that the plate is parallel to the apertures of the transmitting and receiving antennas. In the above-described arrangement, electromagnetic waves which have been emitted by the transmitting antenna 101 and reflected by plate 401 are detected by the receiving antenna 103.

Then, as shown in Fig. 7(b), the plate 401 is inclined with respect to the apertures of the transmitting and receiving antennas, and in the above-described arrangement, electromagnetic waves which have been emitted by the transmitting antenna 101 of the apparatus for measuring width direction edge position and reflected by the plate 401 are detected by the receiving antenna 103. Detection is performed at each five degrees from 5 degrees to 45 degrees of angle of inclination. Thus, detection is performed at nine kinds of angles of inclination. The plane of the plate 401 at 0 degree of angle of inclination is referred to as a reference plane. The reference plane is parallel to the apertures of the transmitting and receiving antennas. When electromagnetic waves travel in a direction perpendicular to the reference plate and are incident onto the plate 401, angle of incidence of the electromagnetic waves is equal to angle of inclination of the plate 401.

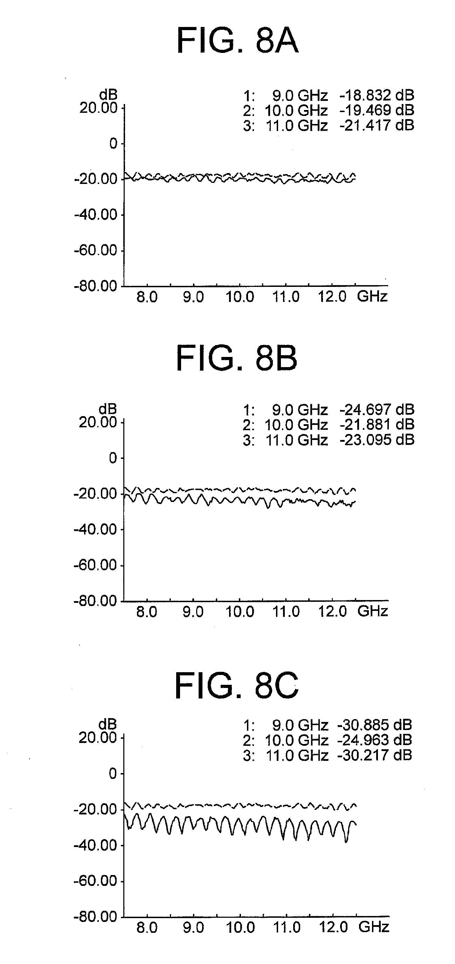

Fig. 8A shows intensity of electromagnetic waves which are emitted by the apparatus for measuring width direction edge position of a strip according to the embodiment of the present invention, reflected by a plate at an angle of inclination of 5 degrees and received by the apparatus in the experiment described in connection with Fig. 7.

In Figs. 8A to 8I, the horizontal axis represents frequency of the carrier wave while the vertical axis represents intensity of received electromagnetic waves. Intensity of electromagnetic waves reflected by a plate at each angle of inclination is represented by a solid line, while intensity of electromagnetic waves reflected by a plate at an angle of inclination of 0 degree is represented by a dotted line as reference. In each drawing, values in unit of dB shown with frequencies represent those of intensity of electromagnetic waves at corresponding frequencies which are reflected by a plate at each angle of inclination.

According to Fig. 8A, in the case of frequency of the carrier wave of 10 GHz, the intensity of electromagnetic waves reflected by the plate at an angle of inclination of 5 degrees is smaller than the intensity of electromagnetic waves reflected by the plate at an angle of inclination of 0 degree by approximately 1.5 dB.

Fig. 8B shows intensity of electromagnetic waves which are emitted by the apparatus for measuring width direction edge position of a strip according to the embodiment of the present invention, reflected by a plate at an angle of inclination of 10 degrees and received by the apparatus in the experiment described in connection with Fig. 7.

According to Fig. 8B, in the case of frequency of the carrier wave of 10 GHz, the intensity of electromagnetic waves reflected by the plate at an angle of inclination of 10 degrees is smaller than the intensity of electromagnetic waves reflected by the plate at an angle of inclination of 0 degree by approximately 3.9 dB.

Fig. 8C shows intensity of electromagnetic waves which are emitted by the apparatus for measuring width direction edge position of a strip according to the embodiment of the present invention, reflected by a plate at an angle of inclination of 15 degrees and received by the apparatus in the experiment described in connection with Fig. 7.

According to Fig. 8C, in the case of frequency of the carrier wave of 10 GHz, the intensity of electromagnetic waves reflected by the plate at an angle of inclination of 15 degrees is smaller than the intensity of electromagnetic waves reflected by the plate at an angle of inclination of 0 degree by approximately 7.0 dB.

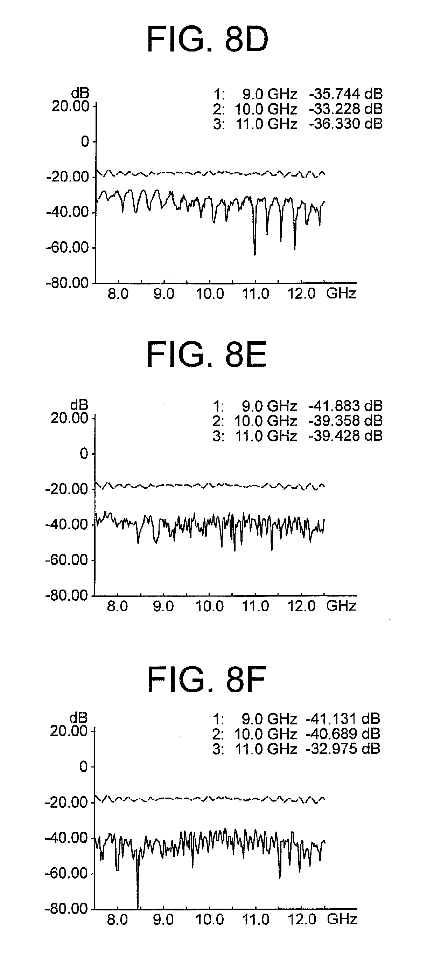

Fig. 8D shows intensity of electromagnetic waves which are emitted by the apparatus for measuring width direction edge position of a strip according to the embodiment of the present invention, reflected by a plate at an angle of inclination of 20 degrees and received by the apparatus in the experiment described in connection with Fig. 7.

According to Fig. 8D, in the case of frequency of the carrier wave of 10 GHz, the intensity of electromagnetic waves reflected by the plate at an angle of inclination of 20 degrees is smaller than the intensity of electromagnetic waves reflected by the plate at an angle of inclination of 0 degree by approximately 15.2 dB.

Fig. 8E shows intensity of electromagnetic waves which are emitted by the apparatus for measuring width direction edge position of a strip according to the embodiment of the present invention, reflected by a plate at an angle of inclination of 25 degrees and received by the apparatus in the experiment described in connection with Fig. 7.

According to Fig. 8E, in the case of frequency of the carrier wave of 10 GHz, the intensity of electromagnetic waves reflected by the plate at an angle of inclination of 25 degrees is smaller than the intensity of electromagnetic waves reflected by the plate at an angle of inclination of 0 degree by approximately 21.4 dB.

Fig. 8F shows intensity of electromagnetic waves which are emitted by the apparatus for measuring width direction edge position of a strip according to the embodiment of the present invention, reflected by a plate at an angle of inclination of 30 degrees and received by the apparatus in the experiment described in connection with Fig. 7.

According to Fig. 8F, in the case of frequency of the carrier wave of 10 GHz, the intensity of electromagnetic waves reflected by the plate at an angle of inclination of 30 degrees is smaller than the intensity of electromagnetic waves reflected by the plate at an angle of inclination of 0 degree by approximately 22.7 dB.

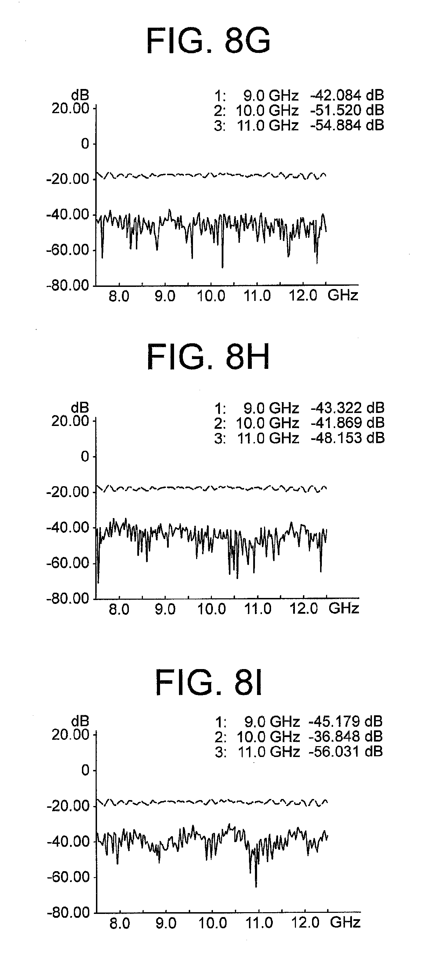

Fig. 8G shows intensity of electromagnetic waves which are emitted by the apparatus for measuring width direction edge position of a strip according to the embodiment of the present invention, reflected by a plate at an angle of inclination of 35 degrees and received by the apparatus in the experiment described in connection with Fig. 7.

According to Fig. 8G, in the case of frequency of the carrier wave of 10 GHz, the intensity of electromagnetic waves reflected by the plate at an angle of inclination of 35 degrees is smaller than the intensity of electromagnetic waves reflected by the plate at an angle of inclination of 0 degree by approximately 33.5 dB.

Fig. 8H shows intensity of electromagnetic waves which are emitted by the apparatus for measuring width direction edge position of a strip according to the embodiment of the present invention, reflected by a plate at an angle of inclination of 40 degrees and received by the apparatus in the experiment described in connection with Fig. 7.

According to Fig. 8H, in the case of frequency of the carrier wave of 10 GHz, the intensity of electromagnetic waves reflected by the plate at an angle of inclination of 40 degrees is smaller than the intensity of electromagnetic waves reflected by the plate at an angle of inclination of 0 degree by approximately 23.9 dB.

Fig. 8I shows intensity of electromagnetic waves which are emitted by the apparatus for measuring width direction edge position of a strip according to the embodiment of the present invention, reflected by a plate at an angle of inclination of 45 degrees and received by the apparatus in the experiment described in connection with Fig. 7.

According to Fig. 8I, in the case of frequency of the carrier wave of 10 GHz, the intensity of electromagnetic waves reflected by the plate at an angle of inclination of 45 degrees is smaller than the intensity of electromagnetic waves reflected by the plate at an angle of inclination of 0 degree by approximately 18.8 dB.

According to the results shown in Figs. 8A to 8I, intensity of electromagnetic waves which are received by the receiving antenna 103 and correspond to noise reflected by the plate 401 is relatively small when the angle of inclination is between 20 degrees and 45 degrees inclusive.

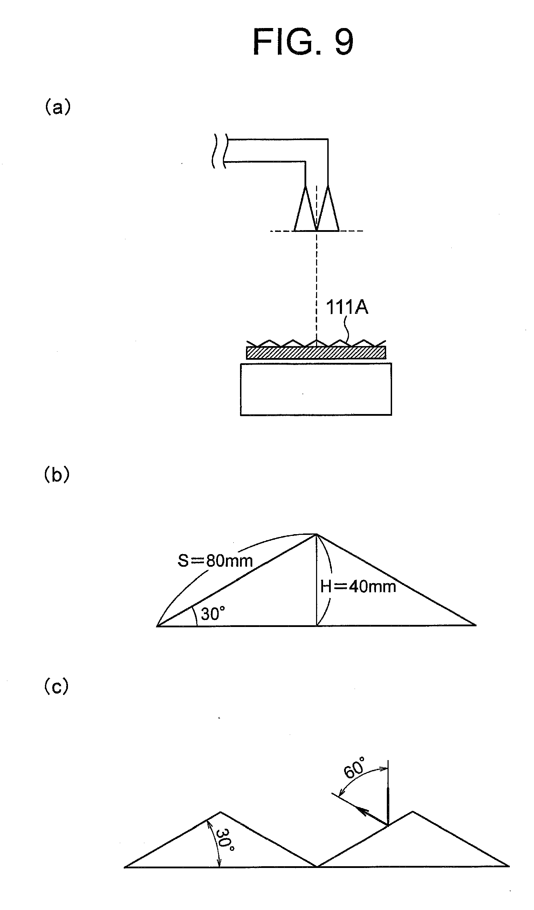

Fig. 9 illustrates an experiment to determine how electromagnetic waves which are emitted by the apparatus for measuring width direction edge position of a strip according to the embodiment of the present invention and reflected by a scattering plate which is corrugated affect the apparatus.

Fig. 9(a) shows an arrangement of transmitting and receiving antennas of the apparatus for measuring width direction edge position of a strip and the scattering plate 111A.

The scattering plate 111A which is corrugated on a surface is 600 mm square. The scattering plate 111A is set at a distance of 500 mm from the transmitting and receiving antennas such that it is parallel to the apertures of the transmitting and receiving antennas. In the text of specification and the claims, a scattering plate means a plate which reflect electromagnetic waves incident onto the plate in a direction which is different from the direction in which the electromagnetic would be specularly reflected when the plate were flat. In the above-described arrangement, electromagnetic waves which have been emitted by the transmitting antenna of the apparatus for measuring width direction edge position and reflected by the scattering plate 111A which is corrugated are detected by the receiving antenna. A size of the scattering plate 111A substantially corresponds to the detection area of the transmitting and receiving antennas shown in Fig. 6.

Fig. 9(b) shows a cross section of the corrugation of the scattering plate 111A. The cross section is perpendicular to the direction of the ridges and troughs of the corrugation. According to the results shown in Figs. 8A to 8I, in the corrugation an angle of inclination of a face with respect to the bottom is preferably between 20 degrees and 45 degrees inclusive. In the present embodiment, an angle of inclination of a face with respect to the bottom is set to 30 degrees. The scattering plate 111A is made from metal such as steel by working. A length of the face S of the corrugation should be more than a half of the wavelength corresponding to the frequency of the carrier wave. In the text of specification and the claims, a length of the face S of the corrugation refers to a distance between adjacent ridge and trough in a cross section perpendicular to the direction of the ridge or trough of the corrugation. If the length of the face S is less than a half of the wavelength of the frequency of the carrier wave, scattering effect thorough reflection on the face might not be obtained. When the frequency of the carrier wave is 10 GHz, the wavelength is 30 mm, and therefore the length of the face S should be 15 mm or more.

Fig. 9(c) illustrates reflection by the corrugation shown in Fig. 9(b) of electromagnetic waves in the direction perpendicular to the apertures of the transmitting and receiving antennas. As shown in Fig. 9(c), electromagnetic waves in the direction perpendicular to the apertures of the transmitting and receiving antennas are reflected by a face of the corrugation at an angle of 60 degrees with respect to the direction.

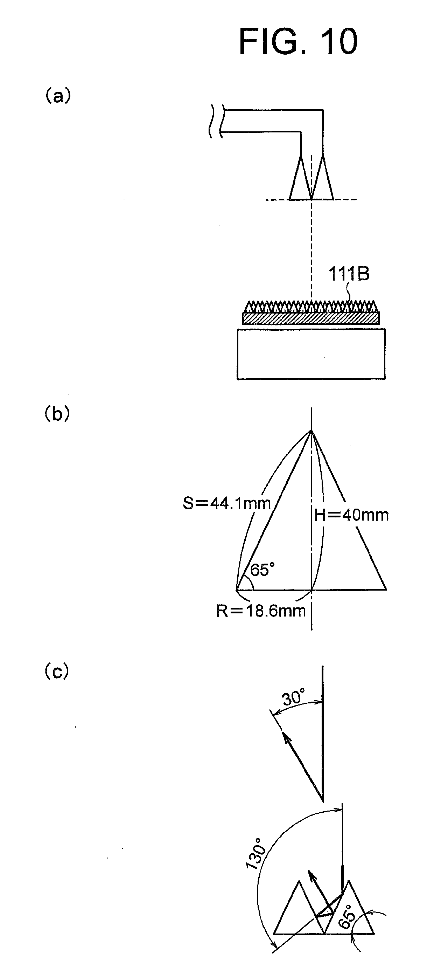

Fig. 10 illustrates an experiment to determine how electromagnetic waves which are emitted by the apparatus for measuring width direction edge position of a strip according to the embodiment of the present invention and reflected by a scattering plate provided with a set of cone- or pyramid-shaped projections affect the apparatus.

Fig. 10(a) shows an arrangement of the transmitting and receiving antennas of the apparatus for measuring width direction edge position of a strip and the scattering plate 111B.

The scattering plate 111B provided with cone- or pyramid-shaped projections on its surface, is 600 mm square. The scattering plate 111B is set at a distance of 500 mm from the transmitting and receiving antennas such that it is parallel to the apertures of the transmitting and receiving antennas. In the above-described arrangement, electromagnetic waves which have been emitted by the transmitting antenna of the apparatus for measuring width direction edge position and reflected by the scattering plate 111B provided with cone- or pyramid-shaped projections on its surface are detected by the receiving antenna. A size of the scattering plate 111B substantially corresponds to the detection area of the transmitting and receiving antennas shown in Fig. 6.

Fig. 10(b) shows a cross section of a cone-shaped projection of the scattering plate 111B. The cross section contains the central axis of the cone-shaped projection (the axis of rotational symmetry of the cone). The scattering plate 111B is made from metal such as steel by working. A length of the conical surface S should be more than a half of the wavelength corresponding to the frequency of the carrier wave. In the text of specification and the claims, a length of a surface of a cone or a pyramid refers to the minimum distance between the top and the bottom of thereof. A length of the conical surface corresponds to a cone distance. If the length of the surface S is less than a half of the wavelength of the frequency of the carrier wave, scattering effect thorough reflection on the surface might not be obtained. When the frequency of the carrier wave is 10 GHz, the wavelength is 30 mm, and therefore the length of the surface S should be 15 mm or more.

Fig. 10(c) illustrates reflection by the cone- or pyramid-shaped projection shown in Fig. 10(b) of electromagnetic waves travelling in the direction perpendicular to the apertures of the transmitting and receiving antennas. As shown in Fig. 10(c), electromagnetic waves travelling in the direction perpendicular to the apertures of the transmitting and receiving antennas are reflected by the conical surface of the cone-shaped projection at an angle of 30 degrees with respect to the direction and at any angle around the central axis..

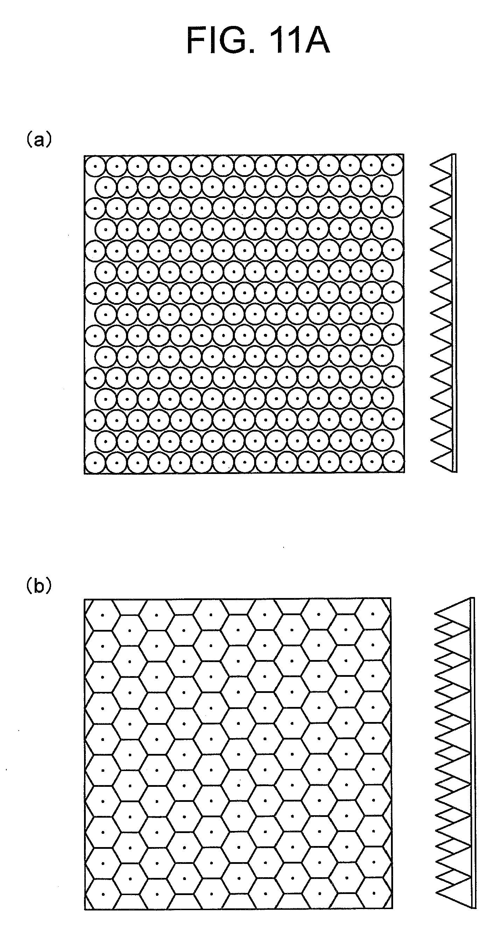

Fig. 11A shows plan views of scattering plates in which cone-shaped projections are arranged on a plane. Fig. 11A(a) shows a plan view of a scattering plate in which cones are arranged on a plane such that the positions of the central axes of the cones form vertices of regular triangles. Fig. 11A(b) shows a plan view of a scattering plate in which cones provided with hexagonal bottoms are arranged on a plane such that the positions of the central axes of the cones similarly form vertices of regular triangles.

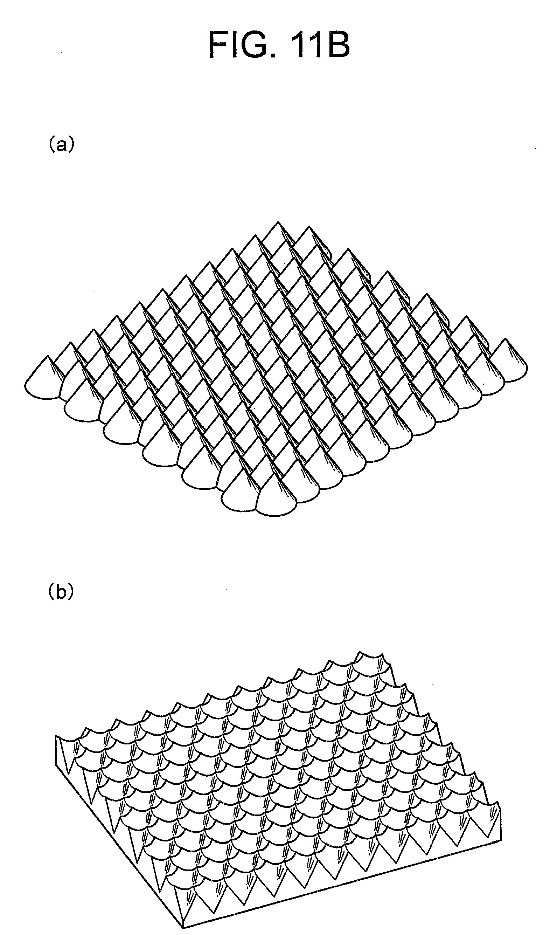

Fig. 11B shows perspective drawings of scattering plates provided respectively with cone-shaped projections and with cone-shaped depressions thereon. Fig. 11B(a) is a perspective drawing of a scattering plate provided with cone-shaped projections thereon while Fig. 11(b) is a perspective drawing of a scattering plate provided with cone-shaped depressions thereon. The scattering plate provided with cone-shaped depressions thereon has a similar degree of effectiveness to the scattering plate provided with cone-shaped projections thereon.

The above-described scattering plate which is corrugated and the above-described scattering plate provided with cone- or pyramid-shaped projections or with cone- or pyramid-shaped depressions thereon are made from metal such as steel by working as described above, and therefore are good in environmental resistance such as heat-resistance and can be widely used.

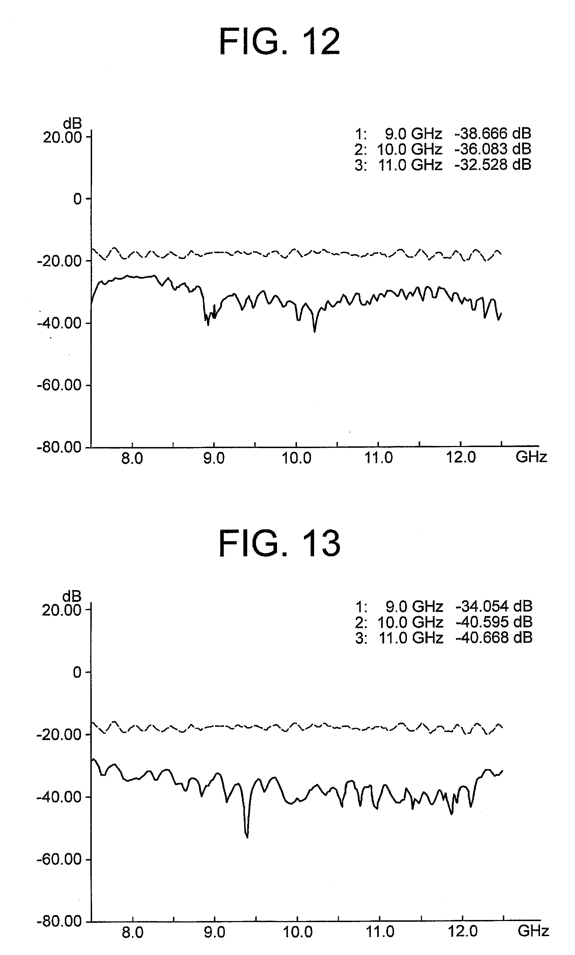

Fig. 12 shows intensity of electromagnetic waves which are emitted by the apparatus for measuring width direction edge position of a strip according to the embodiment of the present invention, reflected by the scattering plate which is corrugated and received by the apparatus in the experiment described in connection with Fig. 9.

In Fig. 12, the horizontal axis represents frequency of the carrier wave while the vertical axis represents intensity of received electromagnetic waves. Intensity of electromagnetic waves reflected by the scattering plate is represented by a solid line, while intensity of electromagnetic waves reflected in the absence of the scattering plate is represented by a dotted line as reference. When the intensity of electromagnetic waves reflected by the scattering plate is compared with the intensity of electromagnetic waves reflected in the absence of the scattering plate in Fig. 12, the former is smaller than the latter by approximately 20.7 dB at the frequency of the carrier wave of 9 GHz, by approximately 18.1 dB at the frequency of the carrier wave of 10 GHz and by approximately 13.5 dB at the frequency of the carrier wave of 11 GHz.

Fig. 13 shows intensity of electromagnetic waves which are emitted by the apparatus for measuring width direction edge position of a strip according to the embodiment of the present invention, reflected by the scattering plate provided with a set of cone- or pyramid-shaped projections and received by the apparatus in the experiment described in connection with Fig. 10.

In Fig. 13, the horizontal axis represents frequency of the carrier wave while the vertical axis represents intensity of received electromagnetic waves. Intensity of electromagnetic waves reflected by the scattering plate is represented by a solid line, while intensity of electromagnetic waves reflected in the absence of the scattering plate is represented by a dotted line as reference. When the intensity of electromagnetic waves reflected by the scattering plate is compared with the intensity of electromagnetic waves reflected in the absence of the scattering plate in Fig. 13, the former is smaller than the latter by approximately 16.1 dB at the frequency of the carrier wave of 9 GHz, by approximately 22.6 dB at the frequency of the carrier wave of 10 GHz and by approximately 21.7 dB at the frequency of the carrier wave of 11 GHz.

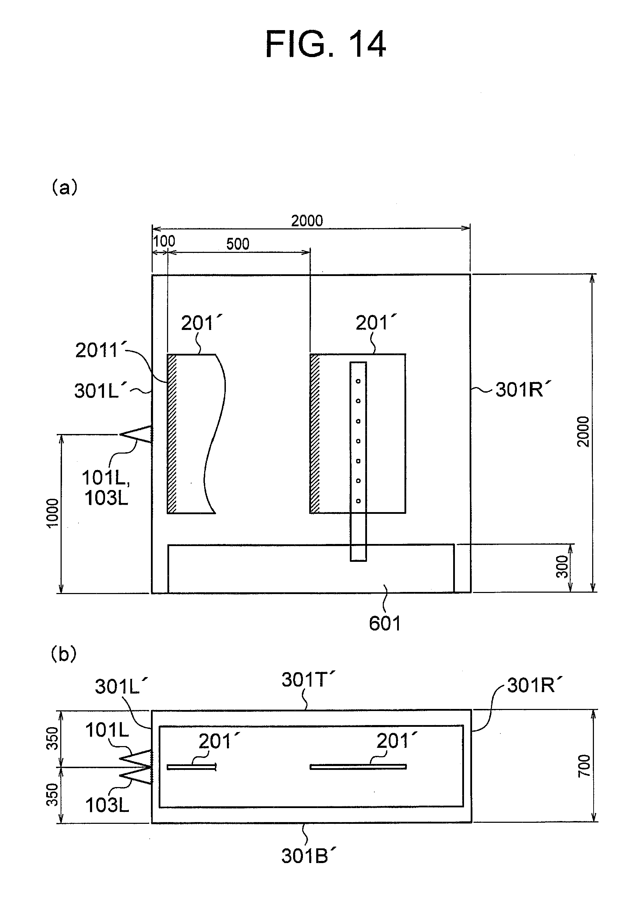

Fig. 14 illustrates an experiment to determine how electromagnetic waves which are reflected by a furnace wall affect the apparatus for measuring width direction edge position of a strip according to the embodiment of the present invention when a position of the strip is changed in the furnace.

Fig. 14(a) shows a cross section of an experimental arrangement, which is parallel to the plane of the strip while Fig. 14(b) shows a cross section of the experimental arrangement, which is perpendicular to the plane of the strip. The experimental arrangement includes a furnace section and a strip drive unit. The furnace section has a furnace wall surface section 301T', a furnace wall surface section 301B', a furnace wall surface section 301L' and a furnace wall surface section 301R'. The furnace wall surface section 301T' and furnace wall surface section 301B' are parallel to the plane of the strip. The furnace wall surface section 301L' and furnace wall surface section 301R' are perpendicular to the plane of the strip. Length of the furnace wall surface section 301T' and that of the furnace wall surface section 301B' in the width direction and in the longitudinal direction of the strip are 2000 mm, respectively. Length of the furnace wall surface section 301L' and that of the furnace wall surface 301R' in the direction perpendicular to the plane of the strip are 700 mm, respectively. The strip drive unit 601 moves a strip section 201' in the strip width direction in the furnace section. Thickness of the strip is 1 mm. The transmitting antenna 101L and the receiving antenna 103L of the apparatus for measuring width direction edge position of a strip according to the embodiment of the present invention are installed on the furnace wall surface section 301L' and electromagnetic waves which have been emitted by the transmitting antenna 101L are received by the receiving antenna 103L.

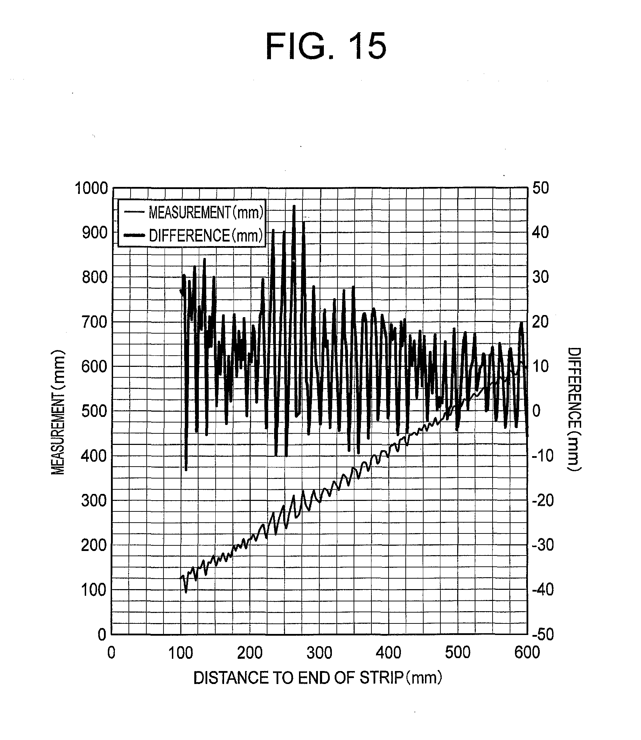

Fig. 15 shows measurements of the end position obtained by the apparatus for measuring width direction edge position of a strip according to the embodiment of the present invention when a scattering plate is not used in the experiment shown in Fig. 14.

The horizontal axis of Fig. 15 represents distance between the left end of the strip section 201' and the furnace wall surface section 301L' in Fig. 14. The vertical axis of Fig. 15 represents measurement of the distance obtained by the apparatus for measuring width direction edge position of a strip according to the present embodiment (scale on the left side) and difference between the measurement of the distance and the real value of the distance (scale on the right side). In fig. 15, the measurement of the distance is represented as a thin solid line while the difference is represented as a thick solid line.

According to Fig. 15, the maximum value of the difference of the measurement of the distance is approximately 45 mm. According to Fig. 15, the difference of the measurement of the distance becomes greater when the distance between the left end of the strip section 201' and the furnace wall surface section 301L' is 300 mm or less. It is estimated that the reason is that electromagnetic waves reflected by the furnace wall surface on the opposite side travel leftward in Fig. 14 along the strip section 201' which extends to a position which is relatively close to the receiving antenna 103L while being repeatedly reflected between the strip section 201' and the furnace wall surface section 301T' and between the strip section 201' and the furnace wall surface section 301B' and reach the receiving antenna 103L. It is supposed that electromagnetic waves reflected by the furnace wall surface on the opposite side can hardly travel leftward in Fig. 14 along the strip section 201' while being repeatedly reflected between the strip section 201' and the furnace wall surface section 301T' and between the strip section 201' and the furnace wall surface section 301B' and can hardly reach the receiving antenna 103L if length B in the direction perpendicular to the plane of the strip of the furnace wall surface 301L (corresponding to furnace wall surface section 301L' in Fig. 14) and the furnace wall surface 301R (corresponding to furnace wall surface section 301R' in Fig. 14) in Fig. 4 is 1000 mm or greater. Accordingly, is estimated that an influence of noise caused by the reflected electromagnetic waves is small if length B is 1000 mm or greater.

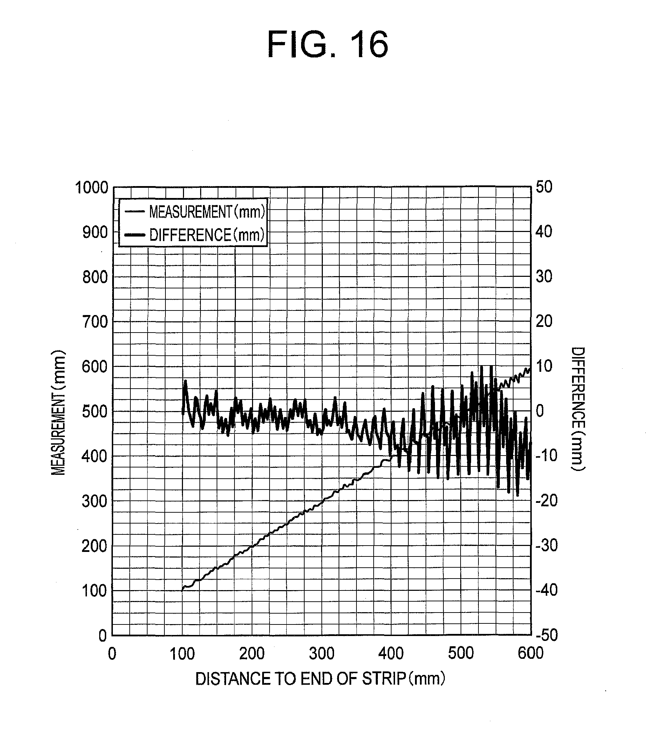

Fig. 16 shows measurements of the end position obtained by the apparatus for measuring width direction edge position of a strip according to the embodiment of the present invention when the scattering plate which is corrugated is used in the experiment shown in Fig. 14.

In the experimental arrangement shown in Fig. 14, the scattering plate 111A a face of which is corrugated as shown in Fig. 9 was installed at the area on the furnace wall surface section 301R', which faces the transmitting and receiving antennas and the experiment was carried out. A size of the scattering plate 111A substantially corresponds to the detection area of the transmitting and receiving antennas which is shown in Fig. 6.

The horizontal axis of Fig. 16 represents distance between the left end of the strip section 201' and the furnace wall surface section 301L' in Fig. 14. The vertical axis of Fig. 16 represents measurement of the distance obtained by the apparatus for measuring width direction edge position of a strip according to the present embodiment (scale on the left side) and difference between the measurement of the distance and the real value of the distance (scale on the right side). In fig. 16, the measurement of the distance is represented as a thin solid line while the difference is represented as a thick solid line.

According to Fig. 16, the maximum value of the difference of the measurement of the distance is approximately 19 mm. When compared with data in Fig. 15, in Fig. 16 the difference of the measurement of the distance is much smaller when the distance between the left end of the strip section 201' and the furnace wall surface section 301L' is 300 mm or less.

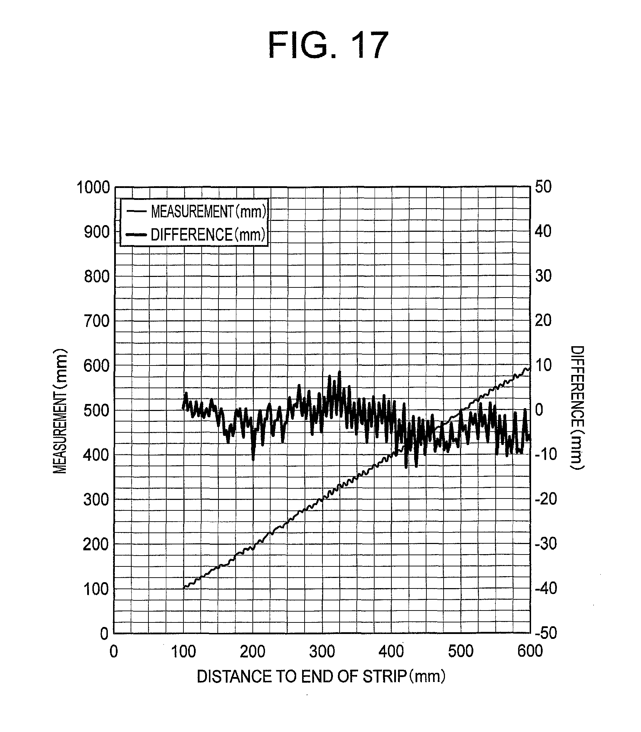

Fig. 17 shows measurements of the end position obtained by the apparatus for measuring width direction edge position of a strip according to the embodiment of the present invention when the scattering plate provided with a set of cone- or pyramid-shaped projections is used in the experiment shown in Fig. 14.

In the experimental arrangement shown in Fig. 14, the scattering plate 111B provided with a set of cone- or pyramid-shaped projections thereon as shown in Fig. 10 was installed at the area on the furnace wall section 301R', which faces the transmitting and receiving antennas and the experiment was carried out. A size of the scattering plate 111B substantially corresponds to the detection area of the transmitting and receiving antennas which is shown in Fig. 6.

The horizontal axis of Fig. 17 represents distance between the left end of the strip section 201' and the furnace wall surface section 301L' in Fig. 14. The vertical axis of Fig. 17 represents measurement of the distance obtained by the apparatus for measuring width direction edge position of a strip according to the present embodiment (scale on the left side) and difference between the measurement of the distance and the real value of the distance (scale on the right side). In fig. 17, the measurement of the distance is represented as a thin solid line while the difference is represented as a thick solid line.

According to Fig. 17, the maximum value of the difference of the measurement of the distance is approximately 13 mm. When compared with data in Fig. 15, in Fig. 17 the difference of the measurement of the distance is much smaller over the whole range of the distance between the left end of the strip section 201' and the furnace wall surface section 301L'.

Based on the results of the experiments shown in Figs. 15 to 17, the inventors have newly obtained the findings that in measurement of the end position of a strip in a furnace accuracy of measurement can be remarkably improved over a wide range of distance between the surface (301L') on which the antennas are installed and the end of an object (201') to be measured when a scattering plate is installed on the surface (301R') facing the surface (301L') on which the antennas are installed. In the absence of a scattering plate, difference of measurement of the distance between the left end of the strip section 201' and the furnace wall surface section 301L' is relatively great when the distance is 300 mm or less. Such a great difference can also be remarkably reduced. It is estimated that the reason is that the installed scattering plate 111A or 111B remarkably reduces electromagnetic waves which are reflected by the furnace wall surface section 301R' facing the surface on which the transmitting antenna is installed, travel leftward in Fig. 14 along the strip section 201' while being repeatedly reflected between the strip section 201' and the furnace wall surface section 301T' and between the strip section 201' and the furnace wall surface section 301B' and reach the receiving antenna 103L.

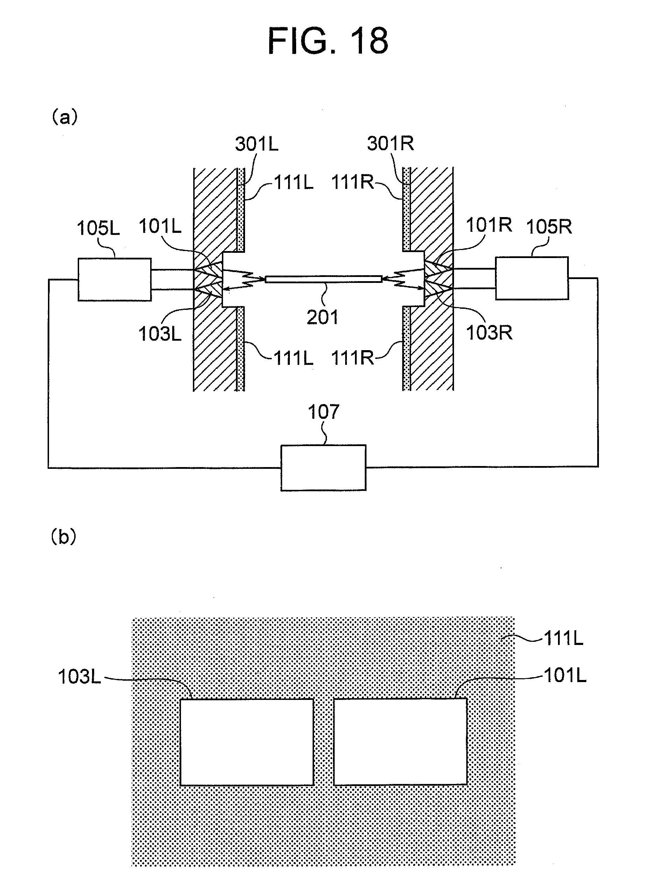

Fig. 18 shows an apparatus for measuring width direction central position of a strip according to an embodiment of the present invention, installed in an enclosed space.

Fig. 18(a) shows the whole arrangement of the apparatus for measuring width direction central position of a strip according to the present embodiment. The arrangement except for a scattering plate is identical with that described in connection with Fig. 1. A strip 201 runs through the enclosed space. A transmitting antenna 101L and a receiving antenna 103L for measuring a position of one of the width direction ends of the strip 201 are installed on a surface 301L of the enclosed space, which faces the one of the width direction ends. A scattering plate 111R for reducing electromagnetic waves received by the receiving antenna 103L as noise is installed on a surface 301R which faces the surface 301L of the enclosed space. A transmitting antenna 101R and a receiving antenna 103R for measuring a position of the other of the width direction ends of the strip 201 are installed on a surface 301R of the enclosed space. A scattering plate 111L for reducing electromagnetic waves received by the receiving antenna 103R as noise is installed on the surface 301L which faces the surface 301R of the enclosed space. The scattering plates 111R and 111L are made of metal such as steel and are corrugated or provided with a set of cone- or pyramid-shaped projections.

Fig. 18(b) shows the scattering plate 111L provided on the surface 301L of the enclosed space. The scattering plate 111L is installed around the transmitting antenna 101L and the receiving antenna 103L. Electromagnetic waves which have been emitted by the transmitting antenna 101R installed on the surface 301R and have reached the scattering plate 111L installed on the surface 301L are reflected or scattered in directions different from the incidence direction and do not travel toward the receiving antenna 103R installed on the surface 301R. On the other hand, electromagnetic waves which have been emitted by the transmitting antenna 101R installed on the surface 301R and have reached the transmitting antenna 101L and the receiving antenna 103L installed on the surface 301L are absorbed without being reflected. The reason is that the transmitting antenna 101L and the receiving antenna 103L are connected respectively to a power amplifier 513 and a power amplifier 515 and are terminated with an impedance of 50 ohms. Accordingly, noise received by the receiving antenna 103R installed on the surface 301R is remarkably reduced compared with the case in which the scattering plate 111L is not installed.

**Claims**

1. An apparatus for measuring width direction end position of a strip which passes through an enclosed space surrounded by a plurality of surfaces, the apparatus comprising:

   an antenna section which emits electromagnetic waves toward the width direction end and receives the electromagnetic waves reflected by the width direction end;
   a signal processing section for determining a position of the width direction end using the reflected electromagnetic waves; and
   a scattering plate for scattering electromagnetic waves which are incident thereon,
   wherein the antenna section is installed on a first surface which faces the width direction end a position of which is to be determined and the scattering plate is installed on a second surface which faces the first surface.

2. An apparatus for measuring width direction end position of a strip according to claim 1, wherein the scattering plate is corrugated.

3. An apparatus for measuring width direction end position of a strip according to claim 1, wherein the scattering plate is provided with a set of cone- or pyramid-shaped projections or cone- or pyramid-shaped depressions arranged thereon.

4. An apparatus for measuring width direction central position of a strip which passes through an enclosed space surrounded by a plurality of surfaces, the apparatus comprising:

   a first antenna section which emits electromagnetic waves toward one of the width direction ends and receives the electromagnetic waves reflected by the one of the width direction ends;
   a second antenna section which emits electromagnetic waves toward the other of the width direction ends and receives the electromagnetic waves reflected by the other of the width direction ends;
   a signal processing section for determining a width direction central position of the strip by determining positions of both width direction ends using data obtained from the reflected electromagnetic waves; and
   scattering plates for scattering electromagnetic waves which are incident thereon,
   wherein the first antenna section is installed on a first surface of the enclosed space, which faces the one of the width direction end, the second antenna section is installed on a second surface of the enclosed space, which faces the other of the width direction ends and the scattering plates are installed respectively around the first antenna section on the first surface and around the second antenna section on the second surface.

5. A scattering plate for scattering microwaves which are incident thereon, wherein the scattering plate is corrugated.

6. A scattering plate according to claim 5, wherein a length of a face of the corrugation is more than a half of the wavelength of the microwaves.

7. A scattering plate according to claim 5 or 6, wherein an angle of incidence of the microwaves with respect to a face of the corrugation ranges from 20 degrees to 45 degrees.

8. A scattering plate for scattering microwaves which are incident thereon, wherein the scattering plate is provided with a set of cone- or pyramid-shaped projections or cone- or pyramid-shaped depressions thereon.

9. A scattering plate according to claim 8, wherein a length of a surface of a cone or a pyramid is more than a half of the wavelength of the microwaves.

# FIG. 1

# FIG. 2

# FIG. 3

A

301L        201        301R

N

S

101L,103L

# FIG. 4

A

301T

301L

301R

B

201

301B

# FIG. 5

# FIG. 6

# FIG. 7

(a)

103    101

500

401

600

(b)

103    101

45°
40°
35°
30°
25°
20°
15°
10°
5°

401

# FIG. 8A

dB
20.00

|   |   |   |
|---|---|---|
| 1: | 9.0 GHz | -18.832 dB |
| 2: | 10.0 GHz | -19.469 dB |
| 3: | 11.0 GHz | -21.417 dB |

0

-20.00

-40.00

-60.00

-80.00

8.0    9.0    10.0    11.0    12.0    GHz

# FIG. 8B

dB
20.00

|   |   |   |
|---|---|---|
| 1: | 9.0 GHz | -24.697 dB |
| 2: | 10.0 GHz | -21.881 dB |
| 3: | 11.0 GHz | -23.095 dB |

0

-20.00

-40.00

-60.00

-80.00

8.0    9.0    10.0    11.0    12.0    GHz

# FIG. 8C

dB
20.00

|   |   |   |
|---|---|---|
| 1: | 9.0 GHz | -30.885 dB |
| 2: | 10.0 GHz | -24.963 dB |
| 3: | 11.0 GHz | -30.217 dB |

0

-20.00

-40.00

-60.00

-80.00

8.0    9.0    10.0    11.0    12.0    GHz

# FIG. 8D

|  |  |  |
|---|---|---|
| 1: | 9.0 GHz | -35.744 dB |
| 2: | 10.0 GHz | -33.228 dB |
| 3: | 11.0 GHz | -36.330 dB |

# FIG. 8E

|  |  |  |
|---|---|---|
| 1: | 9.0 GHz | -41.883 dB |
| 2: | 10.0 GHz | -39.358 dB |
| 3: | 11.0 GHz | -39.428 dB |

# FIG. 8F

|  |  |  |
|---|---|---|
| 1: | 9.0 GHz | -41.131 dB |
| 2: | 10.0 GHz | -40.689 dB |
| 3: | 11.0 GHz | -32.975 dB |

# FIG. 8G

| | | | |
|---|---|---|---|
| 1: | 9.0 GHz | -42.084 dB |
| 2: | 10.0 GHz | -51.520 dB |
| 3: | 11.0 GHz | -54.884 dB |

# FIG. 8H

| | | | |
|---|---|---|---|
| 1: | 9.0 GHz | -43.322 dB |
| 2: | 10.0 GHz | -41.869 dB |
| 3: | 11.0 GHz | -48.153 dB |

# FIG. 8I

| | | | |
|---|---|---|---|
| 1: | 9.0 GHz | -45.179 dB |
| 2: | 10.0 GHz | -36.848 dB |
| 3: | 11.0 GHz | -56.031 dB |

# FIG. 9

(a)

111A

(b)

S=80mm

H=40mm

30°

(c)

60°

30°

# FIG. 10

(a)

111B

(b)

S=44.1mm

H=40mm

65°

R=18.6mm

(c)

30°

130°

65°

# FIG. 11A

(a)

(b)

# FIG. 11B

(a)

(b)

# FIG. 12

# FIG. 13

# FIG. 14

(a)

601

(b)

# FIG. 15

# FIG. 16

# FIG. 17

# FIG. 18

(a)

(b)

## INTERNATIONAL SEARCH REPORT

| | International application No. |
|---|---|
| | PCT/JP2011/000618 |

**A. CLASSIFICATION OF SUBJECT MATTER**
*G01B15/00*(2006.01)i, *G01S13/88*(2006.01)i

According to International Patent Classification (IPC) or to both national classification and IPC

**B. FIELDS SEARCHED**

Minimum documentation searched (classification system followed by classification symbols)
G01B15/00-15/08, G01S13/00-17/95

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2006/048979 A1  (Nireco Corp.),<br>11 May 2006 (11.05.2006),<br>entire text; all drawings<br>& JP 4416798 B2       & US 2008/0094073 A1<br>& EP 1813912 A1 | 1-9 |
| Y | JP 2010-19691 A  (Denso Corp.),<br>28 January 2010 (28.01.2010),<br>paragraphs [0010] to [0028]; fig. 1 to 5<br>(Family: none) | 1-9 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>21 February, 2011 (21.02.11) | Date of mailing of the international search report<br>01 March, 2011 (01.03.11) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/000618 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 113729/1983(Laid-open No. 23767/1985) (Kawasaki Steel Corp.), 18 February 1985 (18.02.1985), column 3, line 17 to column 4, line 1; fig. 4 (Family: none) | 1-9 |
| Y | Microfilm of the specification and drawings annexed to the request of Japanese Utility Model Application No. 93048/1986(Laid-open No. 506/1988) (Mitsubishi Heavy Industries, Ltd.), 05 January 1988 (05.01.1988), column 5, lines 3 to 9; fig. 1 (Family: none) | 1-9 |
| A | JP 8-251696 A  (Kaijo Corp.), 27 September 1996 (27.09.1996), entire text; all drawings (Family: none) | 1-9 |
| A | JP 9-68574 A  (Mitsubishi Electric Corp.), 11 March 1997 (11.03.1997), entire text; all drawings (Family: none) | 1-9 |
| A | JP 63-75510 A  (Bridgestone Corp.), 05 April 1988 (05.04.1988), entire text; all drawings (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4416798 B
- JP 2008277363 A
- JP H0616080 B